# EUROPÄISCHE PATENTSCHRIFT

(11) **EP 3 006 707 B1**
(45) Veröffentlichungstag und Bekanntmachung des Hinweises auf die Patenterteilung: **25.03.2020**
(21) Anmeldenummer: 15002783.7
(22) Anmeldetag: 28.09.2015
(51) Int. Cl.: F02B 7/08, F02D 13/02, F02D 19/06, F02D 19/10, F02D 35/02, F02D 41/00, F02D 41/14, F02D 41/30

(54) **VERFAHREN ZUM BETREIBEN EINER SELBSTZÜNDUNGS-BRENNKRAFTMASCHINE**
METHOD FOR OPERATING A SELF-IGNITING COMBUSTION ENGINE
PROCEDE DESTINE AU FONCTIONNEMENT D'UN MOTEUR A COMBUSTION INTERNE A ALLUMAGE PAR COMPRESSION

(30) Priorität: 06.10.2014 AT 507152014
(43) Veröffentlichungstag der Anmeldung: 13.04.2016
(73) Patentinhaber: Innio Jenbacher GmbH & Co OG, 6200 Jenbach (AT)
(72) Erfinder: Gruber, Friedrich, 6283 Hippach (AT); Spyra, Nikolaus, 6020 Innsbruck (AT); Trapp, Christian, 6067 Absam (AT); Tinschmann, Georg, 6130 Schwaz (AT); Musu, Ettore, 41051 Modena (IT); Christiner, Peter, 8055 Graz (AT)
(74) Vertreter: Torggler & Hofinger Patentanwälte

(56) Entgegenhaltungen:
- EP-A1- 1 689 990
- WO-A1-2005/059336
- WO-A1-2012/028944
- WO-A1-2013/130744
- DE-A1-102009 029 586
- US-A1- 2001 017 127
- US-A1- 2011 288 744
- MARTIN GREVE: "NOX CONTROL WITH CYLINDER PRESSURE BASED ENGINE CONTROL SYSTEMS", MOTORTECHNISCHE ZEITSCHRIFT MTZ, Nr. 2014/09, 1. September 2014 (2014-09-01), Seiten 44-52, XP055158990,
- DAVID SERRANO ET AL: "Exploring the Potential of Dual Fuel Diesel-CNG Combustion for Passenger Car Engine", LECTURE NOTES IN ELECTRICAL ENGINEERING, SPRINGER, GERMANY, Bd. 191, 27. November 2012 (2012-11-27), Seiten 139-153, XP008167274, ISSN: 1876-1100, DOI: 10.1007/978-3-642-33777-2_11 ISBN: 978-3-642-05166-1

## Beschreibung

Die vorliegende Erfindung ist auf ein Verfahren zum Betreiben einer Selbstzündungs-Brennkraftmaschine mit den Merkmalen des Oberbegriffs von Anspruch 1 und auf eine Selbstzündungs-Brennkraftmaschine mit den Merkmalen des Oberbegriffs von Anspruch 19 gerichtet.

Bei der Auslegung von Brennkraftmaschinen besteht ein Zielkonflikt bei der Reduktion verschiedener Arten von Emissionen wie Stickoxiden (NOx), unverbrannten Kohlenwasserstoffen (HC), Kohlenmonoxid (CO) und der Reduktion von Partikelemissionen (engl. *particulate matter,* PM). Ein vielversprechender Ansatz für eine Verbrennung mit hohem Wirkungsgrad und geringen Emissionen ist das sogenannte HCCI Konzept (engl *.Homogenous Charge Compression Ignition).* Hier erfolgt die Entzündung einer hochverdünnten (das heißt mager gemischten und/oder mit einer hohen Abgasrückführrate) und homogenen Kraftstoff-Luft-Mischung durch den Temperaturanstieg während des Verdichtungstaktes nahe dem oberen Totpunkt. Die stark verdünnte Kraftstoff-Luft-Mischung erlaubt eine Verbrennung mit extrem geringen Werten von Stickoxiden (NOx).

Die Selbstentzündung des Kraftstoff-Luft-Gemisches in der Brennkammer wird durch eine Kombination verschiedener Maßnahmen erreicht, wie zum Beispiel ein hohes geometrisches Verdichtungsverhältnis ε und ein Vorwärmen der Ladung durch geeignete Maßnahmen (zum Beispiel Vorwärmen der Ladeluft oder Abgasrückführung, AGR). Da im HCCI Brennverfahren das Kraftstoff-LuftGemisch mehr oder weniger gleichzeitig in der gesamten Brennkammer nahe dem oberen Totpunkt zündet, läuft das Verbrennungsereignis extrem schnell ab.

Bei Dieselmotoren kann der Zündzeitpunkt leicht durch den Einspritzzeitpunkt gesteuert oder geregelt werden. Die Steuerung bzw. Regelung des Zündzeitpunktes in einer HCCI Brennkraftmaschine ist sehr anspruchsvoll.

Aus dem Stand der Technik ist es bekannt, magere und homogene Kraftstoff-Luft-Gemische durch die Einspritzung einer geringen Menge eines zweiten Kraftstoffes zu entzünden, welcher eine höhere Neigung zur Selbstzündung aufweist als der erste Kraftstoff. Bei der Wahl des Einspritzzeitpunktes dieses zweiten Kraftstoffes kann der aktuelle Betriebszustand der Brennkraftmaschine berücksichtigt werden. Mit zunehmender Last der Brennkraftmaschine wird die Menge des zweiten Kraftstoffes angepasst.

Dieses Konzept ist als Dual-Fuel-Verbrennung bekannt. Wird der zweite Kraftstoff früh und für geringe Emissionen teilweise vorgemischt eingespritzt, wird das Verfahren als Dual-Fuel-PCCI oder RCCI-Verbrennung genannt. Wird der zweite Kraftstoff in einer solchen Weise eingespritzt, dass beide Kraftstoffe homogen gemischt werden, nennt man das Brennverfahren Dual-Fuel-HCCI.

Die Kombination zweier Kraftstoffe mit unterschiedlichen Selbstzündungseigenschaften erlaubt eine viel bessere Kontrolle des Verbrennungsvorganges. Ohne einen solchen zweiten Kraftstoff mit unterschiedlichen Selbstzündungseigenschaften kann der Zündzeitpunkt über die Abgasrückführungsrate, das ist der Anteil an zurückgeführtem Abgas, eingestellt werden. Allerdings ist die Variation der Abgasrückführungsrate keine Maßnahme mit raschem Effekt, sondern zeigt eine verzögerte Reaktion.

Wie es hinreichend aus der Literatur bekannt ist, sind alle bekannten PCCI, HCCI und RCCI und Dual-Fuel-Brennverfahren mit hohen HC und CO Emissionen verbunden.

Die US 6,659,071 zeigt eine Brennkraftmaschine, die nach einem PCCI Verfahren betrieben werden kann, wobei eine Mischeinrichtung eine Mischung eines ersten Kraftstoffes mit Ansaugluft erzeugt, eine Kraftstoffeinspritzvorrichtung gezeigt ist, die einen zweiten Kraftstoff direkt in die Brennkammer einspritzen kann, und ein Steuerungssystem gezeigt ist, welches die Einspritzung des zweiten Kraftstoffs in solcher Art und Weise regelt, dass vor der Selbstzündung durch die Verdichtung der Ladung wenigstens eine "control injection", das heißt eine Steuerungseinspritzung, stattfindet. Gemäß der US 6,659,071 kann es vorgesehen sein, dass der Hauptkraftstoff Erdgas und der zweite Kraftstoff Diesel ist.

Aus der WO 98/07973 ist ein Verfahren zur Regelung einer PCCI Brennkraftmaschine bekannt, wobei die Regelung des Verbrennungsfortschrittes durch Messen eines Betriebszustandes der Brennkraftmaschine erfolgt, welcher indikativ für den Verbrennungsfortschritt ist. Um den Beginn der Verbrennung genau zu kontrollieren, werden Temperatur, Druck, Äquivalenzverhältnis und/oder die Selbstzündungseigenschaften der Kraftstoff-Luft-Mischung gesteuert/geregelt. Weiter ist beschrieben, dass Beginn und die Geschwindigkeit der Verbrennung so geregelt werden, dass faktisch das gesamte Verbrennungsereignis innerhalb bestimmter Kurbelwinkelgrenzen stattfindet, im speziellen zwischen 20° vor dem oberen Totpunkt bis 35° nach dem oberen Totpunkt.

Dies ist darin begründet, dass der Zündbeginn und die Verbrennungsgeschwindigkeit in einer PCCI Brennkraftmaschine abhängig sind von Temperaturverhältnissen, den Druckverhältnissen und den Selbstzündungseigenschaften des Kraftstoffes, zum Beispiel der Oktan- oder Methanzahl oder Aktivierungsenergie und der Zusammensetzung der Ladeluft im Zylinder (Sauerstoffgehalt, Abgasrückführrate AGR, Feuchtigkeit, Äquivalenzverhältnis usw.).

US 6,463,907 zeigt eine HCCI Brennkraftmaschine und ein Verfahren zum Betreiben einer solchen Brennkraftmaschine, wobei durch die Zugabe eines zweiten Kraftstoffes bevorzugt Diesel, die Schwerpunktlage der Verbrennung auf einen bevorzugten Kurbelwinkel eingestellt wird. Die gewünschte Verzögerung bei der Verbrennung ist dabei unabhängig von der Brenndauer des Hauptkraftstoffes, welche wiederum über die AGR-Rate in Verbindung mit dem Kraftstoff-Luft-Verhältnis definiert wird. Durch die Zugabe des zweiten Kraftstoffes kann nun der Kurbelwinkelbereich, in welchem die Verbrennung stattfindet, über einen weiten Bereich von Drehzahlen der Brennkraftmaschine konstant gehalten werden. Wegen der relativ geringen Brenngeschwindigkeit von Erdgas nach der Zündung werden relativ geringe Abgasrückführraten und ein hoher Ladedruck eingesetzt. Leistung und Drehzahl der gegenständlichen HCCI Brennkraftmaschine sind geregelt über das Brennstoff-Luft-Verhältnis oder den Ladedruck.

Ebenfalls bekannt sind Ansätze um Zündzeiten über die externe AGR Rate zu bestimmen. Bei hohen Raten von rückgeführtem Abgas verzögert sich die Abbrandgeschwindigkeit wegen des reduzierten Sauerstoffgehaltes.

Die Kontrollstrategie für Dual-Fuel-HCCI Brennkraftmaschinen gemäß der US 6,463,907 ist es, den Zeitpunkt der Selbstzündung über die Einspritzung eines Kraftstoffes mit hoher Cetanzahl, typischer Weise Diesel, vor oder früh in der Verdichtungsphase zu bestimmen. Die zugeführte Menge an Kraftstoff mit hoher Cetanzahl hängt von der Leistung und der Drehzahl der Brennkraftmaschine ab und ist so gewählt, dass der Zündzeitpunkt auf einen geeigneten Kurbelwinkel eingestellt wird. Die Brenndauer ist davon unabhängig durch die AGR Rate geregelt.

Weitere aus dem Stand der Technik bekannte Konzepte gehen aus der US 2001/0017127 A1, der DE 10 2009 029586 A1, der US 2011/288744 A1, der WO 2013/130744 A1, der WO 2012/028944 A1 und der WO 2005/059336 A1 hervor.

Zusammenfassend, werden die Bedingungen für Selbstzündung eines mageren homogenen Kraftstoff-Luft-Gemisches nach dem Stand der Technik durch hohe AGR-Raten, Kühlen des rückgeführten Abgases und hohe geometrische Verdichtungsverhältnisse bestimmt.

Die aus dem Stand der Technik bekannten Konzepte können nicht sowohl Emissionen als auch mechanische Spannungen unter bestimmten Schwellwerten halten. Aufgabe der vorliegenden Erfindung ist es, Emissionen unter Kontrolle zu bringen.

Die Aufgabe wird gelöst durch ein Verfahren gemäß Anspruch 1 und durch einen Selbstzündungsmotor gemäß Anspruch 19. Vorteilhafte Ausführungsformen sind in den abhängigen Ansprüchen angegeben.

Auch wenn in der folgenden Diskussion nur ein Einspritzereignis des zweiten Kraftstoffes besprochen wird, ist es jedoch so zu verstehen, dass es zwei oder mehr Einspritzereignisse des zweiten Kraftstoffes geben kann. Im Falle, dass es mehr als ein Einspritzereignis gibt, kann die folgende Maßnahme im Hinblick auf lediglich eines mehrere oder alle zusammen getroffen werden.

Im Hinblick auf Gase beziehen sich Prozentangaben auf Volumsprozent.

Der erste Kraftstoff kann Erdgas oder eine Mischung von Erdgas und CO₂ sein, solchermaßen, dass die Menge von CO₂ und CH₄ größer als 80 % ist.

Der zweite Kraftstoff kann ein Kraftstoff mit einer Cetanzahl zwischen 30 und 70, vorzugsweise zwischen 40 und 60 sein. Ein Beispiel dafür ist Dieselkraftstoff.

Dadurch, dass vorgesehen ist, dass die Emissionen des wenigstens einen Zylinders, welche von der Verbrennung verursacht werden, beobachtet werden, wobei der Schritt des Beobachtens der Emissionen durch eine Zylinderdruckmessung ausgeführt wird und ein Unterscheiden zwischen NOX und HC Emissionen umfasst, wobei wenn die Emissionen über den jeweiligen vorgegebenen Schwellwerten sind, individuell für den wenigstens einen Zylinder
- die Menge und/oder der Zeitpunkt der Einspritzung des zweiten Kraftstoffes und/oder
- die Temperatur der Zylinderladung
verändert werden, sodass die Emissionen unter die jeweiligen vorbestimmten Schwellwerte zurückgehen, dadurch also wird erreicht, dass man die Brennkraftmaschine wesentlich besser bei verschiedenen Umgebungsbedingungen betreiben kann. Beispiele für Umgebungsbedingungen sind die Umgebungstemperatur, die Feuchtigkeit, die Höhe, bei welcher die Brennkraftmaschine betrieben wird.

Vorzugsweise ist vorgesehen, dass die von der Verbrennung verursachten mechanische Spannung des wenigstens einen Zylinders beobachtet wird und wenn die mechanische Spannung über einem vorgegebenen Schwellwert liegt, die
- Menge und/oder der Zeitpunkt des eingespritzten zweiten Kraftstoffes und/oder
- die Temperatur der Zylinderladung
   individuell für den wenigstens einen Zylinder solchermaßen verändert werden, dass die mechanische Spannung unter ihren vorgegebenen Schwellwert zurückgeht

Auch im Hinblick auf mechanische Toleranzen, die notwendigerweise bei einer Brennkraftmaschine vorhanden sind, können durch die vorliegende Methode viel besser Abweichungen zwischen individuellen Zylindern bezüglich individueller Kraftstoffinjektoren, Verdichtungsverhältnisse, Gaswechsel, Ablagerungen etc. ausgeglichen werden. Wenn die Kraftstoffqualität sich ändert, kann das erfinderische Konzept auch diese Änderungen ausgleichen.

Es kann vorgesehen sein, dass das Beobachten der Emissionen des wenigstens einen Zylinders und/oder der mechanischen Spannung des wenigstens einen Zylinders, welche von der Verbrennung verursacht werden, durch Messen von Signalen erfolgt, welche charakteristisch für das Verbrennungsereignis in dem wenigstens einen Zylinder sind.

Es ist nicht erforderlich, die Emissionen direkt zu messen, sondern es können die Verbrennungscharakteristika anstelle dessen verwendet werden.

Dies kann durch verschiedene Wege geschehen:
Es kann zum Beispiel vorgesehen sein, dass der Schritt des Messens von Signalen, welche charakteristisch für das Verbrennungsereignis in dem wenigstens einen Zylinder sind, das Bestimmen einer charakteristischen Zeitposition in dem Verbrennungsereignis und/oder das Bestimmen der Dauer der Verbrennung umfasst. Eine solche charakteristische Position der Zeit der Verbrennung kann zum Beispiel die Schwerpunktlage der Verbrennung sein.

Erfindungsgemäß werden die Schwerpunktlage und die Brenndauer durch Zylinderdruckmessungen erhalten.

Die Dauer der Verbrennung, auch "Brenndauer" genannt, ist ein Maß für den Verbrennungsfortschritt in einem Verbrennungszyklus, ausgedrückt als der verbrannte Massenanteil während eines bestimmten Kurbelwinkels (engl. *mass fraction burned during a certain crank angle*). So bedeutet zum Beispiel eine Brenndauer von Δθ_{0-10%} von 15° Kurbelwinkel, dass 10 % der Ladungsmasse innerhalb von 15° Kurbelwinkelumdrehung verbrannt sind.

Die Schwerpunktlage der Verbrennung kennzeichnet den Zustand, bei welchem die Hälfte der Frischladung verbrannt ist. Es ist auch als MFB50 Wert bekannt, das heißt 50 % *mass fraction burned.*

Diese Begriffe können auch in Lehrbüchern über Brennkraftmaschinen gefunden werden, siehe im Speziellen Heywood, John B., Internal Combustion Engine Fundamentals, New York, McGraw-Hill, 1988.

Es kann vorgesehen sein, dass der Schritt des Änderns der Menge von eingespritztem zweitem Kraftstoff eine Reduktion der Menge des zweiten Kraftstoffes umfasst, wenn die mechanische Spannung zu groß ist.

Indem die Menge des zweiten Kraftstoffes reduziert wird, wird die Verbrennung verzögert und dadurch der Spitzendruck (engl. *peak firing pressure*) reduziert, wodurch sich die mechanischen Spannungen auf die Brennkraftmaschine reduzieren.

Es kann auch vorgesehen sein, dass der Schritt des Änderns der Temperatur der Zylinderladung ein Senken der Temperatur der Zylinderladung umfasst, wenn die mechanische Spannung zu groß ist.

Dies kann zum Beispiel durch ein Senken der Einlasstemperatur des ersten Kraftstoffes und Luft erreicht werden.

Alternativ oder zusätzlich, wenn die Brennkraftmaschine mit einem variablen Ventiltrieb ausgerüstet ist, welcher in der Lage ist Ein- oder Auslassventilbetätigungszeiten und/oder die Ventilerhebungskurven individuell im Hinblick auf den wenigstens einen Zylinder zu variieren, kann vorgesehen sein, dass der Schritt des Änderns der Temperatur der Zylinderladung durch den variablen Ventiltrieb erreicht wird, vorzugsweise indem die Auslassventile früher geschlossen werden, um die Temperatur der Zylinderladung zu erhöhen bzw. indem die Auslassventile später geschlossen werden, um die Temperatur der Zylinderladung zu verringern.

Abgesehen von den Betätigungszeiten können möglicherweise auch die Ventilerhebungskurven bei einem variablen Ventiltrieb kontrolliert werden. Die Ventilerhebungskurve beschreibt die jeweilige Position der Ventile relativ zu dem geschlossenen Zustand in Bezug auf den Kurbelwinkel.

Indem die Ventilerhebungskurven verändert werden, kann die verbleibende Menge von Abgas auf sehr vorteilhafte Weise moduliert werden. Wenn die Auslassventile in der Einlassphase wieder-öffnen oder offen gelassen werden, fließen Abgase zurück in den Zylinder und erhöhen damit die Temperatur der Zylinderladung.

In einem anderen Beispiel, wenn die Einlassventile auch während des Auslasstaktes öffnen, können Abgase in das Einlasssystem fließen und damit die Ladungstemperatur im Einlass erhöhen, wodurch infolge, wenn das Einlassventil dann während des regulären Einlassprozesses geöffnet wird, die Ladungstemperatur erhöht wird.

Weiters kann vorgesehen sein, dass der Schritt des Änderns der Temperatur der Zylinderladung mittels eines variablen Ventiltriebs dadurch erreicht wird, indem ein bereits geschlossenes Auslassventil während des Einlasstaktes des Kolbens wieder-öffnet, und damit die Temperatur der Zylinderladung erhöht.

Dies hat den besonderen Vorteil, dass die Ladungstemperatur im Zylinder zylinderindividuell kontrolliert werden kann. Es ist weiters vorteilhaft, dass die Ventilbetätigungszeiten auf einer Zyklus nach Zyklus Basis verändert werden können, das heißt, die Kontrollantwort ist sehr rasch.

Als weitere Alternative kann vorgesehen sein, dass der Schritt des Änderns der Zylinderladungstemperatur mittels variablen Ventiltriebs dadurch erreicht wird, dass ein geschlossenes Einlassventil während des Auslasstaktes wieder - öffnet und damit die Temperatur der Zylinderladung erhöht.

Durch Ändern der Ventilbetätigungszeiten wird die Menge von Restabgasen in den Zylindern verändert und damit die interne Abgasrückführrate variiert. Nachdem die Temperatur der Restabgase sehr hoch ist, ist diese Maßnahme sehr effektiv, um die Ladungstemperatur zu erhöhen.

Weiters kann vorgesehen sein, dass der Schritt des Änderns der Zylinderladungstemperatur durch eine zusätzliche Einspritzung des zweiten Kraftstoffes beim Gaswechsel-OT (oberer Totpunkt) während die Einlass- und Auslassventile geschlossen sind, erreicht wird (negative Ventilüberschneidung). Ein Erhöhen der Menge von verbranntem zweiten Kraftstoff während einer negativen Ventilüberschneidung erhöht die Temperatur der Zylinderladung, während ein Verringern der Menge an verbranntem zweiten Kraftstoff während einer negativen Ventilüberschneidung die Temperatur der Zylinderladung verringert.

Erfindungsgemäß ist vorgesehen, dass der Schritt des Beobachtens der Emission des wenigstens einen Zylinder ein Unterscheiden zwischen NOx und HC Emissionen umfasst.

Diese Unterscheidung wird durch Beobachten der Verbrennungscharakteristika durchgeführt, die entscheidend für die Bildung der spezifischen Emissions-Spezies sind.

Das heißt zum Beispiel, dass bei gegebenem Lambda, die Mischhomogenität und gegebener Abgasrückführrate die NOx Emissionen weitestgehend von der Verbrennungslage abhängen, das heißt, von der Schwerpunktlage.

Je früher die Schwerpunktlage liegt (ausgedrückt in Kurbelwinkel), desto höher ist die NOx Bildung, je später die Verbrennungslage, desto geringer die NOx Bildung.

Die NOx Bildung ist auch beeinflusst von der Verbrennungsgeschwindigkeit ausgedrückt als Brenndauer (das heißt Kurbelwinkelwert für Δθ_{10-90%}). Der Zusammenhang ist solchermaßen, dass eine hohe Verbrennungsgeschwindigkeit (kleines Δθ) in höherem NOx resultiert, während eine geringere Verbrennungsgeschwindigkeit in geringerem NOx resultiert. Denn im Falle von höheren Verbrennungsgeschwindigkeiten findet der Großteil der Verbrennung nahe dem oberen Totpunkt und damit bei relativ hohen Temperaturen statt. Nachdem die Temperatur der bestimmende Parameter für die Bildung von NOx ist, resultiert in hohen NOx Werten für hohe Verbrennungsgeschwindigkeiten.

Für die HC Emission sind folgende Charakteristika relevant für deren Bildung: Je höher die Verbrennungsgeschwindigkeit, desto geringer die HC Bildung. Das heißt für HC Emissionen ist der Zusammenhang zu den oben angegebenen Verbrennungsparametern genau umgekehrt zu dem Zusammenhang für die NOx Bildung.

Es ist gemäß der Erfindung vorgesehen, dass wenn die NOx Emissionen zu hoch sind der Einspritzzeitpunkt des zweiten Kraftstoffes vorverlegt wird.

Daher kann vorgesehen sein, dass wenn die NOx Emissionen zu hoch sind und der Betrag des eingespritzten zweiten Kraftstoffes reduziert und/oder die Temperatur der Zylinderladung verringert wird.

Nachdem die Menge des zweiten Kraftstoffes die Zylinderladungstemperatur nach Zündung des zweiten Kraftstoffes bestimmt, beeinflusst die Menge des zweiten Kraftstoffes auch die NOx Bildung.

Darin bewirkt eine Verringerung der Menge vom zweiten Kraftstoff eine geringere Ladungstemperatur und damit geringere NOx Bildung. Weiters ist durch Absenken der Kraftstoffkonzentration in dem Zylinder durch Reduzieren der Menge vom zweiten Kraftstoff die NOx Bildung reduziert, nachdem höhere Kraftstoffkonzentrationen generell die NOx Bildung fördern.

Umgekehrt, wenn die HC-Emissionen zu hoch sind, wird die Menge von eingespritztem zweiten Kraftstoff erhöht und/oder der Einspritzzeitpunkt des zweiten Kraftstoffes verzögert und/oder die Temperatur der Zylinderladung erhöht. Die Temperatur der Zylinderladung kann zum Beispiel durch externe und/oder interne AGR erhöht werden. Alternativ oder zusätzlich kann die Lufttemperatur erhöht werden.

Das heißt, wenn NOx Emissionen zu hoch sind, wird die Menge an eingespritztem zweiten Kraftstoff reduziert und/oder der Einspritzzeitpunkt des zweiten Kraftstoffes vorverlegt und/oder die Temperatur der Zylinderladung verringert.

Andere Merkmale und Vorteile der Erfindung werden im Licht der begleitenden Figuren deutlich, wobei
- Fig. 1a: ein Ablaufdiagramm der Regelungslogik bezüglich der NOx Emissionen zeigt,
- Fig. 1b: ein Ablaufdiagramm der Regelungslogik bezüglich der HC Emissionen zeigt,
- Fig. 2: ein Ablaufdiagramm der Regelungslogik bezüglich der mechanischen Spannungen zeigt.

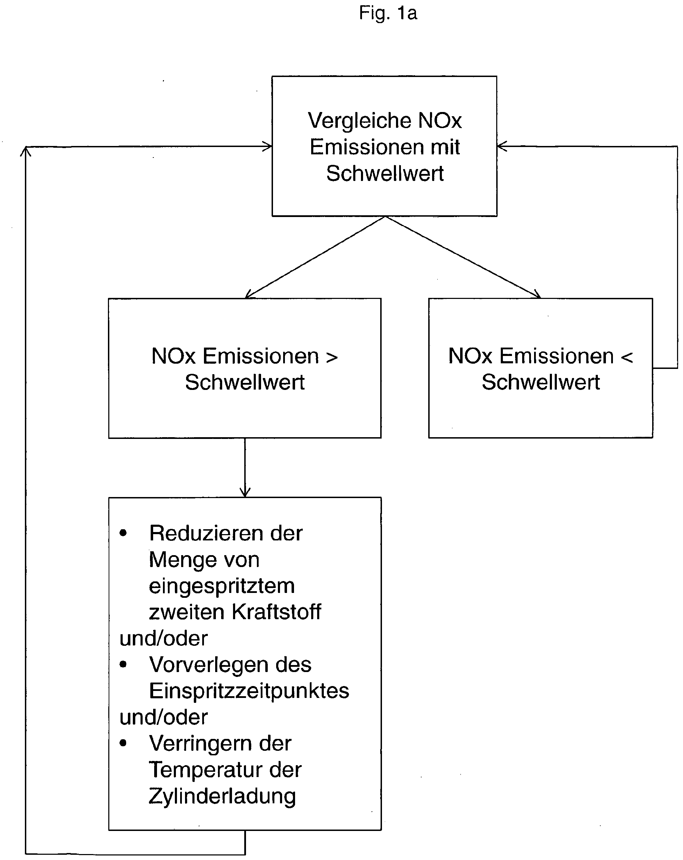

Figur 1a zeigt ein Ablaufdiagramm der Regelungslogik bezüglich der NOx Emissionen. In einem ersten Schritt werden die aktuellen NOx Emissionen mit einem vorgegebenen Schwellwert verglichen. Im Falle, dass die NOx Emissionen den vorgegebenen Schwellwert nicht überschreiten, geht die Schleife zurück zum Start.

Im Falle allerdings, dass die NOx Emissionen den vorgegebenen Schwellwert überschreiten (linke Seite des Ablaufdiagramms) werden die folgenden Maßnahmen zur Begegnung der NOx Emissionen ausgeführt:
- Reduzieren der Menge von eingespritztem zweiten Kraftstoff und/oder
- Vorverlegen des Einspritzzeitpunktes und/oder
- Verringern der Temperatur der Zylinderladung.

Nach Ausführung der oberen Maßnahmen geht die Schleife zurück zum Vergleich der NOx Emissionen mit einem vorgegebenen Schwellwert.

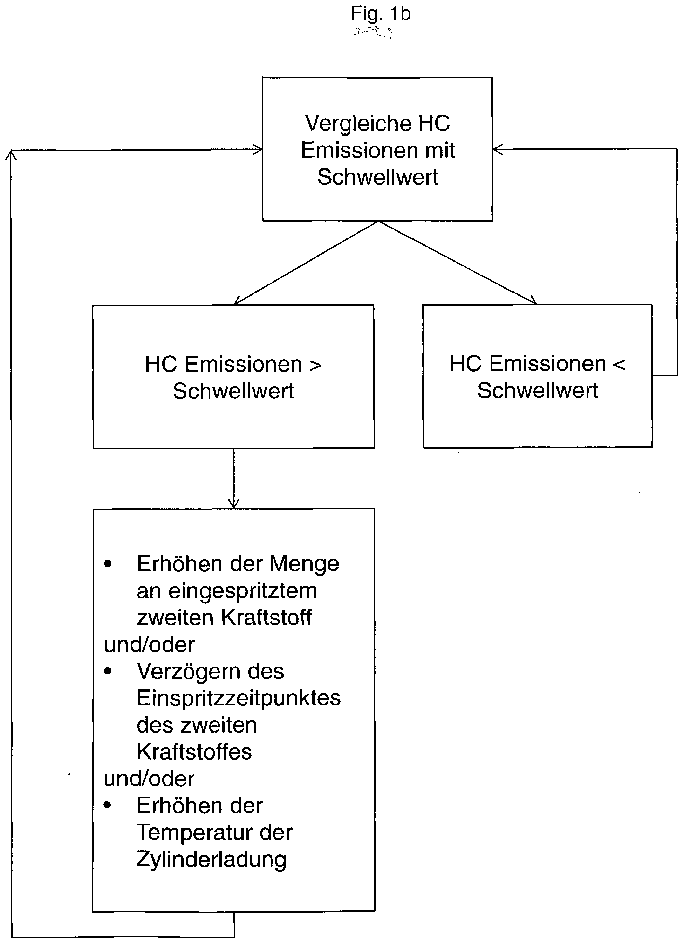

In ähnlicher Weise zeigt die Figur 1b ein Ablaufdiagramm der Regelungslogik bezüglich der Kohlenwasserstoff (HC) Emissionen. In einem ersten Schritt werden die aktuellen HC Emissionen mit einem vorgegebenen Schwellwert verglichen. Im Falle, dass die HC Emissionen den vorgegebenen Schwellwert nicht überschreiten, geht die Schleife zurück zum Start. Im Falle allerdings, dass die HC Emissionen den vorgegebenen Schwellwert überschreiten (linke Seite des Ablaufdiagramms) werden folgende Maßnahmen zur Begegnung der HC Emissionen ausgeführt:
- Erhöhen der Menge von eingespritztem zweiten Kraftstoff und/oder
- Verzögerung des Einspritzzeitpunktes des zweiten Kraftstoffes und/oder
- Erhöhung der Temperatur der Zylinderladung.

Nach Ausführung der oberen Maßnahmen geht die Schleife zurück zum Vergleich der HC Emissionen mit einem vorgegebenen Schwellwert.

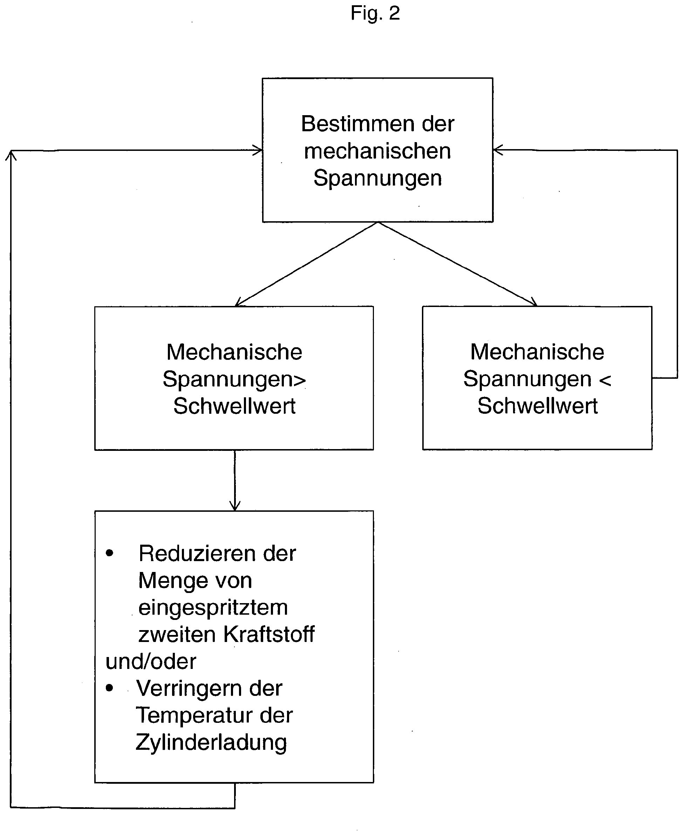

Figur 2 zeigt ein Ablaufdiagramm der Regelungslogik bezüglich der mechanischen Lasten (Spannung) auf die Brennkraftmaschine. Für die mechanische Spannung charakteristische Signale werden durch geeignete Sensoren (hier nicht gezeigt) bestimmt. Die für die mechanische Spannung bezeichnenden Werte werden dann mit einem vorgegebenen Schwellwert für die mechanische Spannung verglichen. Im Falle, dass die Werte für die mechanische Spannung kleiner als der Schwellwert sind, geht die Schleife zurück zum Start. Im Falle, dass die Werte für die mechanische Spannung den vorgegebenen Schwellwert überschreiten, werden folgende Maßnahmen zur Reduktion der mechanischen Spannungen ausgeführt:
- Reduziere die Menge von eingespritztem zweiten Kraftstoff und/oder
- Verringerung der Temperatur der Zylinderladung

Nach Ausführung der oberen Maßnahmen geht die Schleife zurück zu dem Vergleich der Werte für die mechanische Spannung zu einem vorgegebenen Schwellwert.

## Patentansprüche

1. Verfahren zum Betreiben einer Selbstzündungsbrennkraftmaschine mit wenigstens einem Zylinder und einem in dem wenigstens einen Zylinder bewegbaren Kolben, wobei das Verfahren die Schritte umfasst:
- Bilden eines zündfähigen Gemisches durch weitgehend homogenes Mischen eines ersten Kraftstoffes und Luft und Einführen dieser Mischung in den wenigstens einen Zylinder
- Verdichten des zündfähigen Gemisches mit dem Kolben in einem Verdichtungstakt
- Während des Verdichtungstaktes, aber vor Start der Verbrennung, Einspritzen eines zweiten Kraftstoffes zu dem zündfähigen Gemisch, wodurch eine Zylinderladung geschaffen wird, wobei der zweite Kraftstoff eine höhere Neigung zur Selbstzündung aufweist als der erste Kraftstoff
- Fortsetzen des Verdichtungstaktes, bis die Verbrennung an jenen Punkten des wenigstens einen Zylinders einsetzt, wo die Konzentration des zweiten Kraftstoffes und/oder die Temperatur des Gemisches am höchsten ist,
**dadurch gekennzeichnet, dass** die von der Verbrennung verursachte Emission des wenigstens einen Zylinders beobachtet wird und wobei der Schritt des Beobachtens der Emissionen durch eine Zylinderdruckmessung ausgeführt wird und ein Unterscheiden zwischen NOX und HC Emissionen umfasst, wobei wenn die Emissionen über jeweiligen vorgegebenen Schwellwerten liegt,
- die Menge und/oder der Zeitpunkt des eingespritzten zweiten Kraftstoffes und/oder
- die Temperatur der Zylinderladung individuell für den wenigstens einen Zylinder solchermaßen verändert werden, dass die Emissionen unter ihre jeweiligen vorgegebenen Schwellwerte zurückgehen, wobei wenn die NOX Emissionen zu hoch sind, der Einspritzzeitpunkt des zweiten Kraftstoffes vorverlegt wird.

2. Verfahren gemäß Anspruch 1, wobei die von der Verbrennung verursachten mechanische Spannung des wenigstens einen Zylinders beobachtet wird und wenn die mechanische Spannung über einem vorgegebenen Schwellwert liegt, die
- Menge und/oder der Zeitpunkt des eingespritzten zweiten Kraftstoffes und/oder
- die Temperatur der Zylinderladung individuell für den wenigstens einen Zylinder solchermaßen verändert werden, dass die mechanische Spannung unter ihren vorgegebenen Schwellwert zurückgeht.

3. Verfahren nach wenigstens einem der vorangegangenen Ansprüche, wobei der erste Kraftstoff Erdgas oder eine Mischung von Erdgas und CO₂ ist, dermaßen, dass die Menge von CO₂ und CH4 größer als 80 % sind.

4. Verfahren nach wenigstens einem der vorangegangenen Ansprüche , wobei der zweite Kraftstoff eine Cetanzahl zwischen 30 und 70, vorzugsweise zwischen 40 und 60 aufweist.

5. Verfahren nach wenigstens einem der vorangegangenen Ansprüche, wobei das Beobachten der von der Verbrennung verursachten Emission des wenigstens einen Zylinders und/oder der mechanischen Spannung auf den wenigstens einen Zylinder durch Messen von für das Verbrennungsereignis charakteristischen Signalen in den wenigstens einen Zylinder ausgeführt wird.

6. Verfahren nach Anspruch 5, wobei der Schritt des Messens der für die Verbrennung in dem wenigstens einen Zylinder charakteristischen Signale das Bestimmen eines charakteristischen Zeitpunktes des Verbrennungsereignisses und/oder der Dauer des Verbrennungsereignisses umfasst.

7. Verfahren nach wenigstens einem der vorangegangenen Ansprüche, wobei der Schritt des Änderns der Menge von eingespritztem zweiten Kraftstoff das Reduzieren der Menge des zweiten Kraftstoffes umfasst, wenn die mechanische Spannung zu groß ist.

8. Verfahren nach wenigstens einem der vorangegangenen Ansprüche, wobei der Schritt des Änderns der Temperatur der Zylinderladung ein Senken der Temperatur der Zylinderladung umfasst, wenn die mechanische Spannung zu groß ist.

9. Verfahren nach Anspruch 8, wobei die Temperatur der Zylinderladung durch Senken der Einlasstemperatur des ersten Kraftstoffes und Luft verringert wird.

10. Verfahren nach einem der vorangegangenen Ansprüche, wobei wenn die NOX Emissionen zu hoch sind, die Menge an eingespritztem zweiten Kraftstoff reduziert und/oder die Temperatur der Zylinderladung verringert wird.

11. Verfahren nach einem der vorangegangenen Ansprüche, wobei wenn die HC Emissionen zu hoch sind, die Menge an eingespritztem zweiten Kraftstoff erhöht und/oder der Einspritzzeitpunkt des zweiten Kraftstoffes verzögert und/oder die Temperatur der Zylinderladung erhöht wird.

12. Verfahren nach wenigstens einem der vorangegangenen Ansprüche, **dadurch gekennzeichnet, dass** die In-Zylindertemperatur entweder durch eine während des Gaswechselvorganges im Brennraum gehaltene interne AGR-Rate oder durch eine in das Einlasssystem rückgeführte externe AGR-Rate kontrolliert wird.

13. Verfahren nach wenigstens einem der vorangegangenen Ansprüche, **dadurch gekennzeichnet, dass** die Brennkraftmaschine einen variablen Ventiltrieb umfasst, welcher in der Lage ist, die Betätigungszeiten und/oder die Ventilerhebungskurven der Ein- oder Auslassventile im Hinblick auf den wenigstens einen Zylinder individuell zu variieren.

14. Verfahren nach Anspruch 13, **dadurch gekennzeichnet, dass** der Schritt des Änderns der Temperatur der Zylinderladung durch den variablen Ventiltrieb erreicht wird, vorzugsweise indem das Auslassventil in solcher Weise geschlossen wird, um die interne AGR und damit die Temperatur der Zylinderladung zu erhöhen bzw. indem das Auslassventil in solcher Weise geschlossen wird, um die interne AGR und damit die Temperatur der Zylinderladung zu reduzieren.

15. Verfahren nach Anspruch 13 oder 14, **dadurch gekennzeichnet, dass** der Schritt des Änderns der Temperatur der Zylinderladung mittels dem variablen Ventiltrieb erreicht wird, indem ein bereits geschlossenes Abgasventil in der Einlassphase des Kolbens wieder-öffnet und dadurch die Temperatur der Zylinderladung erhöht.

16. Verfahren nach einem der Ansprüche 13 bis 15 wobei der Schritt des Änderns der Temperatur der Zylinderladung durch den variablen Ventiltrieb dadurch erreicht wird, indem ein geschlossenes Einlassventil während des Auslasstaktes wieder öffnet und dadurch die Temperatur der Zylinderladung erhöht.

17. Verfahren nach wenigstens einem der vorangegangenen Ansprüche, wobei der Schritt des Änderns der Temperatur der Zylinderladung entweder ein Erhöhen des Gegendrucks zur Erhöhung der Temperatur der Zylinderladung oder ein Verringern des Gegendrucks zum Verringern der Temperatur der Zylinderladung umfasst.

18. Verfahren nach wenigstens einem der vorangegangenen Ansprüche, wobei der Schritt des Änderns der Temperatur der Zylinderladung durch eine zusätzliche Einspritzung des zweiten Kraftstoffes und Verbrennung beim Gaswechsel-OT erfolgt, während die Ein- und Auslassventile geschlossen sind.

19. Eine Selbstzündungsbrennkraftmaschine mit wenigstens einem Zylinder und einem in dem wenigstens einen Zylinder bewegbaren Kolben und einem Injektor zum Einspritzen des zweiten Kraftstoffes mit einer elektronischen Steuer- oder Regel-Einheit, welche dazu eingerichtet ist, ein Verfahren nach wenigstens einem der Ansprüche 1 bis 18 auszuführen.

## Claims

1. A method for operating a compression ignition engine, the engine having at least one cylinder and a piston movable in the at least one cylinder and the method comprising the steps of:
• forming a combustible mixture by mixing generally homogeneously a first fuel and air and introducing this mixture into the at least one cylinder
• compressing the combustible mixture with the piston in a compression stroke
• injecting a second fuel to the combustible mixture at an injection-time of the second fuel during the compression stroke but before start of combustion thus creating a cylinder charge, the second fuel being easier to autoignite compared to the first fuel,
• continuing the compression stroke until combustion starts at those locations in the at least one cylinder where concentration of the second fuel is highest and / or the temperature of the mixture is the highest,
**characterized in that** emission of the at least one cylinder caused by the combustion is monitored and wherein the step of monitoring of the emissions is carried out by means of in-cylinder pressure measurement and comprises a difference between NOx and HC emissions, wherein if the emissions are above respective predetermined thresholds,
• the amount and/or the timing of the second fuel injected, and/or
• the temperature of the cylinder charge
are changed individually for the at least one cylinder such that emissions go down below their respective predetermined thresholds, wherein if NOx emissions are too high the injection timing of the second fuel is being advanced.

2. The method according to claim 1, wherein the mechanical stress of the at least one cylinder caused by the combustion is monitored and if the mechanical stress is above a predetermined threshold,
• the amount and/or the timing of the second fuel injected and/or
• the temperature of the cylinder charge
are changed individually for the at least one cylinder such that the mechanical stress goes down below the predetermined threshold.

3. Method according to any of the preceding claims, wherein the first fuel is natural gas or a mixture of natural gas and CO₂ such that the amount of CO₂ and CH4 is higher than 80%.

4. Method according to any of the preceding claims, wherein the second fuel has a cetane number between 30 and 70, preferably between 40 and 60.

5. Method according to any of the preceding claims, wherein monitoring emission of the at least one cylinder and/or mechanical stress of the at least one cylinder caused by the combustion is being carried out by measuring signals characteristic for the combustion event in the at least one cylinder.

6. Method according to claim 5, wherein the step of measuring signals characteristic for the combustion event in the at least one cylinder comprises determining a characteristic position in time of the combustion event and/or duration of the combustion event.

7. Method according to any of the preceding claims, wherein the step of changing the amount of the second fuel injected comprises reducing the amount of the second fuel if the mechanical stress is too high.

8. Method according to any of the preceding claims, wherein the step of changing the temperature of the cylinder charge comprises lowering the temperature of the cylinder charge if the mechanical stress is too high.

9. Method according to claim 8, wherein the temperature of the cylinder charge is being lowered by lowering the intake temperature of first fuel and air.

10. Method according to any of the preceding claims, wherein if NOx emissions are too high the amount of the second fuel injected is being reduced and/or the temperature of the cylinder charge is being decreased.

11. Method according to any of the preceding claims, wherein if HC emissions are too high the amount of the second fuel injected is being increased and/or the injection timing of the second fuel is being retarded and/or the temperature of the cylinder charge is being increased.

12. Method according to any of the preceding claims, **characterized in that** the in-cylinder temperature is controlled either by an internal EGR-rate kept in the combustion chamber during gas exchange process, or by an external EGR rate recirculated in the intake system.

13. Method according to any of the preceding claims, wherein the engine comprises a variable valve train capable of varying individually with respect to the at least one cylinder the exhaust and/or intake valve timing and/or valve lift curves.

14. Method according to claim 13, wherein the step of changing the temperature of the cylinder charge is effected by way of the variable valve train - preferably by closing the exhaust valve in a way to increase the internal EGR and therefore increase the temperature of the cylinder charge or closing the exhaust valve in a way to decrease the internal EGR and therefore to decrease temperature of the cylinder charge, respectively.

15. Method according to claim 13 or 14, wherein the step of changing the temperature of the cylinder charge is effected by way of the variable valve train by re-opening an already closed exhaust valve in the intake phase of the piston thereby increasing the temperature of the cylinder charge.

16. Method according to any of claims 13 to 15, wherein the step of changing the temperature of the cylinder charge is effected by way of the variable valve train by re-opening a closed intake valve during the exhaust stroke of the piston thereby increasing the temperature of the cylinder charge.

17. Method according to any of the preceding claims, wherein the step of changing the temperature of the cylinder charge comprises either increasing the back-pressure to increase the temperature of the cylinder charge or decreasing the back-pressure to decrease the temperature of the cylinder charge.

18. Method according to any of the preceding claims, wherein the step of changing the temperature of the cylinder charge is affected by an additional injection of the second fuel and combustion in the gas exchange TDC while the intake and exhaust valves are closed.

19. Compression ignition engine, the engine having at least one cylinder and a piston moveable in the at least one cylinder, and an injector to inject the second fuel, having an electronic control unit configured to operate according to a method according to at least one of the claims 1 through 18.

## Revendications

1. Procédé de fonctionnement d'un moteur à combustion interne à auto-allumage, doté d'au moins un cylindre et d'un piston mobile dans l'au moins un cylindre, dans lequel le procédé comprend les étapes :
- formation d'un mélange inflammable par mélange largement homogène d'un premier carburant et d'air et introduction de ce mélange dans l'au moins un cylindre
- compression du mélange inflammable avec le piston dans une course de compression
- pendant la course de compression, mais avant le début de la combustion, injection d'un deuxième carburant dans le mélange inflammable, de sorte qu'une charge de cylindre est créée, dans lequel le deuxième carburant possède une inclination à l'auto-allumage supérieure à celle du premier carburant
- poursuite de la course de compression, jusqu'à ce que la combustion commence à chaque point de l'au moins un cylindre où la concentration du deuxième carburant et/ou la température du mélange est la plus élevée,
**caractérisé en ce que** l'émission de l'au moins un cylindre résultant de la combustion est observée et dans lequel l'étape de l'observation des émissions est réalisée par une mesure de pression du cylindre et comprend une discrimination entre les émissions de NOX et de HC, dans lequel lorsque les émissions sont au-delà de valeurs de seuil prédéfinies respectives,
- la quantité et/ou l'instant du deuxième carburant injecté et/ou
- la température de la charge de cylindre
sont individuellement modifiées pour l'au moins un cylindre de façon que les émissions reviennent sous leurs valeurs de seuils prédéfinies respectives, dans lequel lorsque les émissions de NOX sont trop élevées, l'instant d'injection du deuxième carburant est avancé.

2. Procédé selon la revendication 1, dans lequel la tension mécanique résultant de la combustion de l'au moins un cylindre est observée et lorsque la tension mécanique est au-dessus d'une valeur seuil prédéfinie,
- la quantité et/ou l'instant du deuxième carburant injecté et/ou
- la température de la charge de cylindre
sont individuellement modifiées pour l'au moins un cylindre de façon que la tension mécanique revienne sous sa valeur de seuil prédéfinie.

3. Procédé selon au moins une des revendications précédentes, dans lequel le premier carburant est le gaz naturel ou un mélange de gaz naturel et de CO₂ tel que les quantités de CO₂ et de CH4 sont supérieures à 80 %.

4. Procédé selon au moins une des revendications précédentes, dans lequel le deuxième carburant possède un indice de cétane entre 30 et 70, de préférence entre 40 et 60.

5. Procédé selon au moins une des revendications précédentes, dans lequel l'observation de l'émission de l'au moins un cylindre résultant de la combustion et/ou de la tension mécanique sur l'au moins un cylindre est réalisée par mesure de signaux caractéristiques de l'événement de combustion dans l'au moins un cylindre.

6. Procédé selon la revendication 5, dans lequel l'étape de la mesure de signaux caractéristiques de la combustion dans l'au moins un cylindre comprend la détermination d'un instant caractéristique de l'événement de combustion et/ou de la durée de l'événement de combustion.

7. Procédé selon au moins une des revendications précédentes, dans lequel l'étape de modification de la quantité de deuxième carburant injecté comprend la réduction de la quantité du deuxième carburant lorsque la tension mécanique est trop élevée.

8. Procédé selon au moins une des revendications précédentes, dans lequel l'étape de modification de la température de la charge de cylindre comprend une diminution de la température de la charge de cylindre lorsque la tension mécanique est trop élevée.

9. Procédé selon la revendication 8, dans lequel la température de la charge de cylindre est réduite par diminution de la température d'admission du premier carburant et de l'air.

10. Procédé selon l'une des revendications précédentes, dans lequel lorsque les émissions de NOX sont trop élevées, la quantité de deuxième carburant injecté est réduite et/ou la température de la charge de cylindre est diminuée.

11. Procédé selon l'une des revendications précédentes, dans lequel lorsque les émissions de HC sont trop élevées, la quantité de deuxième carburant injecté est augmentée et/ou l'instant d'injection du deuxième carburant est retardé et/ou la température de la charge de cylindre est augmentée.

12. Procédé selon au moins une des revendications précédentes, **caractérisé en ce que** la température dans le cylindre est contrôlée ou bien par un taux RGE interne maintenu dans la chambre de combustion pendant l'opération d'échange des gaz ou bien par un taux RGE externe recirculé dans le système d'admission.

13. Procédé selon au moins une des revendications précédentes, **caractérisé en ce que** le moteur à combustion interne comprend une commande de soupape variable, laquelle est en mesure de faire varier individuellement les temps d'actionnement et/ou les courbes de levée de soupape des soupapes d'admission ou d'échappement en regard de l'au moins un cylindre.

14. Procédé selon la revendication 13, **caractérisé en ce que** l'étape de modification de la température de la charge de cylindre est effectuée par la commande de soupape variable, la soupape d'échappement étant de préférence fermée de manière à augmenter la RGE interne et ainsi la température de la charge de cylindre ou la soupape d'échappement étant de préférence fermée de manière à réduire la RGE interne et ainsi la température de la charge de cylindre.

15. Procédé selon la revendication 13 ou 14, **caractérisé en ce que** l'étape de modification de la température de la charge de cylindre est effectuée au moyen de la commande de soupape variable, une soupape d'échappement déjà fermée se rouvrant dans la phase d'admission du piston et augmentant ainsi la température de la charge de cylindre.

16. Procédé selon l'une des revendications 13 à 15, dans lequel l'étape de modification de la température de la charge de cylindre est effectuée au moyen de la commande de soupape variable, une soupape d'admission fermée se rouvrant pendant la course d'échappement et augmentant ainsi la température de la charge de cylindre.

17. Procédé selon au moins une des revendications précédentes, dans lequel l'étape de modification de la température de la charge de cylindre comprend ou bien une augmentation de la contre-pression afin d'augmenter la température de la charge de cylindre ou bien une diminution de la contre-pression afin de diminuer la température de la charge de cylindre.

18. Procédé selon au moins une des revendications précédentes, dans lequel l'étape de modification de la température de la charge de cylindre s'effectue par une injection supplémentaire du deuxième carburant et une combustion lors du point mort haut (OT) de l'échange des gaz, pendant que les soupapes d'admission et d'échappement sont fermées.

19. Moteur à combustion interne à auto-allumage doté d'au moins un cylindre et d'un piston mobile dans le cylindre et d'un injecteur permettant d'injecter le deuxième carburant avec une unité de commande ou de régulation électronique, laquelle est disposée pour réaliser un procédé selon au moins une des revendications 1 à 18.
